Europäisches Patentamt

European Patent Office

Office européen des brevets

(11) Veröffentlichungsnummer: **0 432 360 A2**

# (12) EUROPÄISCHE PATENTANMELDUNG

(21) Anmeldenummer: **90114942.7**

(22) Anmeldetag: **03.08.90**

(51) Int. Cl.5 **B60R 16/02**

(30) Priorität: **09.12.89 DE 3940710**

(43) Veröffentlichungstag der Anmeldung:
**19.06.91 Patentblatt 91/25**

(84) Benannte Vertragsstaaten:
**DE FR GB NL**

(71) Anmelder: **TZN Forschungs- und
Entwicklungszentrum Unterlüss GmbH
Neuensothriether Strasse 20**

**3104 Unterlüss(DE)**

(72) Erfinder: **Schmitt, Klemens
Koblenzer Strasse 23
W-5439 Rothenbach(DE)**

(74) Vertreter: **Podszus, Burghart, Dipl.-Phys.
Rheinmetall GmbH Ulmenstrasse 125
Postfach 6609
W-4000 Düsseldorf(DE)**

(54) Vorrichtung zur Ermittelung der mittleren Wasserfilmdicke aufStrassenoberflächen.

(57) Die Erfindung betrifft eine Vorrichtung zur Ermittlung der mittleren Wasserfilmdicke (d) auf Straßenoberflächen (6), wobei die Reflektion von Mikrowellen an der Oberfläche des Wasserfilmes (5) gemessen wird.

Um auf einfache Weise Wasserfilmdicken von mehreren Millimetern berührungslos und mit großer Genauigkeit zu messen, wird vorgeschlagen, die Vorrichtung aus mindestens zwei Teilsystemen (20, 30, 40) die jeweils eine Signalquelle (21, 31, 41) und einen Empfänger (24, 34, 44) enthalten, aufzubauen. Die einzelnen Teilsysteme (20, 30, 40) arbeiten mit unterschiedlichen Frequenzen (f1, f2, f3) die derart gewählt sind, daß die der jeweiligen Frequenz zugeordneten Meßbereiche maximaler Genauigkeit (A, B, C) sich aneinander anschließen und den vorgegebenen zu bestimmenden Wasserfilmdickenbereich überdecken. Die Teilsysteme (20, 30, 40) sind mit einer Abtast- und Steuervorrichtung (50) verbunden, welche jeweils das Teilsystem (20, 30, 40) aktiviert, welches bei der entsprechenden Wasserfilmdicke (d) die maximale Meßgenauigkeit aufweist.

FIG.3

EP 0 432 360 A2

## VORRICHTUNG ZUR ERMITTLUNG DER MITTLEREN WASSERFILMDICKE AUF STRASSENOBERFLÄCHEN

Die Erfindung betrifft eine Vorrichtung zur Ermittlung der mittleren Wasserfilmdicke wie sie die Merkmale des Oberbegriffes des Anspruchs 1 definieren.

Eine derartige Vorrichtung ist bereits aus der Dissertation von H. Scharsching "Berührungslose Feststellung der Fahrbahnnässe und Anwendung für Verkehrsbeeinflussungsanlagen", Wien 1986, bekannt. Die von Scharsching verwendete Meßfrequenz beträgt 10,6 GHz, so daß eindeutige Wasserfilmdickenmessungen nur bis 0,8 mm möglich sind. Allerdings erwähnt Scharsching auf der 1. Seite der Kurzfassung seiner Arbeit, daß für größere Wasserfilmdicken Frequenzen von 2,5 GHz oder 0,44 GHz zur Anwendung gelangen müssen.

Bei Verwendung niedriger Frequenzen muß allerdings berücksichtigt werden, daß sich vor allem im unteren Meßbereich der Wasserfilmdicke relativ ungenaue Meßergebnisse ergeben.

Aus der DE-AS 27 12 199 sowie aus der EP 0 005 696 sind Vorrichtungen zur Warnung vor Straßenglätte bekannt, bei denen mit Hilfe einer Lichtquelle bestimmter Wellenlänge die Fahrbahnoberfläche bestrahlt und das von der Fahrbahn zurückgeworfene Licht gemessen wird. Dabei soll die Wellenlänge des Lichtes so gewählt werden, daß sie in einem Absorptionsmaximum des Eises liegt. Bei dieser Vorrichtung macht man sich die Erkenntnis zu Nutze, daß Eis geringfügig andere Absorptionsbande aufweist als Wasser und Wasserdampf. Somit soll es möglich sein, auch bei nasser Fahrbahn den Zeitpunkt der Eisbildung exakt zu erfassen.

Nachteilig ist vor allem, daß mit Hilfe dieser Vorrichtung eine Wasserfilmdickenmessung nicht möglich ist. Außerdem wird das Meßergebnis sehr stark durch die Verschmutzung von Sender und Empfänger beispielsweise durch Matsch etc. beeinflußt.

Aus der DE-OS 29 12 645 ist ferner eine Warnvorrichtung vor Straßenglätte bekannt. Hierbei wird die Änderung der Reflektion von Mikrowellenstrahlen bei Eisbildung gemessen. Nachteilig bei dieser Messung ist ebenfalls das eine Wasserfilmdickenmessung nicht möglich ist.

Aus der DE-OS 30 23 444 ist eine Infrarotlicht verwendende Straßenzustandsermittlungseinrichtung bekannt. Der jeweilige Zustand der Straße wird durch Auswertung des empfangenen gestreuten und reflektierten Lichtes ermittelt. Eine Bestimmung der Wasserfilmdicke nasser Straßen ist mit dieser Vorrichtung nicht möglich.

Schließlich ist es auch bekannt (vgl. Seite 5, Zeilen 15 bis 25 der DE-OS 30 23 444) Straßenzustandsermittlungseinrichtungen so aufzubauen, daß ein Detektor der Wasser und Temperaturen nachweist unter der Straßenoberfläche installiert ist. Eine solche Einrichtung ist jedoch insofern nachteilig, als die Installierung des Detektors erhebliche Straßenarbeit erfordert und der unter der Straßenoberfläche eingebaute Detektor durch den Straßenverkehr der Gefahr von Beschädigungen unterliegt, weshalb zeit- und arbeitsaufwendige Wartungsarbeiten erforderlich sein können.

Aufgabe der vorliegenden Erfindung ist es die eingangs erwähnte Vorrichtung so weiterzuentwikkeln, daß es möglich ist auf einfache Weise Wasserfilmdicken bis zu mehreren Millimetern berührungslos und mit großer Genauigkeit zu messen.

Diese Aufgabe wird erfindungsgemäß durch die Merkmale des kennzeichnenden Teiles des Anspruchs 1 gelöst.

Weitere besonders vorteilhafte Ausgestaltungen der Erfindung ergeben sich aus den Unteransprüchen.

Der Erfindung liegt also der Gedanke zugrunde den gesamten zu vermessenden Wasserfilmdickenbereich in mehrere Teilbereiche aufzuteilen, wobei jeder Teilbereich mit einer unterschiedlichen Sendefrequenz vermessen wird, die so gewählt ist, daß in dem Teilbereich eine hohe Meßgenauigkeit erreicht wird. Die bei verschiedenen Frequenzen arbeitenden Teilsysteme sind so miteinander verschaltet, daß bei jeder Wasserfilmdicke eine eindeutige Zuordnung zwischen Signalpegel und Wasserfilmdicke möglich ist, d. h. Mehrdeutigkeiten aufgrund von Interferenzen vermieden werden.

Das System ist in der Lage, Wasserfilmdicken im Millimeterbereich berührungslos zu messen. Es kann auch nachträglich einfach installiert werden. Die Fläche über die bei der Messung der Wasserschichtdicke gemittelt wird kann durch die Wahl der Sendeantenne und deren Abstand von der Oberfläche festgelegt werden. Denkbar ist neben einer stationären Anordnung über der Straße auch eine Anordnung unter Fahrzeugen, so daß der Straßenzustand dem Fahrer dieses Fahrzeuges automatisch angezeigt wird.

Weitere Einzelheiten und Vorteile der Erfindung werden im folgenden anhand eines Ausführungsbeispieles und mit Hilfe von Figuren näher erläutert.

Es zeigt:

Figur 1 eine an sich bekannte Mikrowellenmeßanordnung wie sie bereits von Scharsching beschrieben wird;

Figur 2 den funktionellen Verlauf der Reflektion bei verschiedenen Frequenzen in Abhängigkeit von der mittleren Wasserfilmdicke; und

Figur 3 eine aus drei Teilsystemen bestehende erfindungsgemäße Vorrichtung.

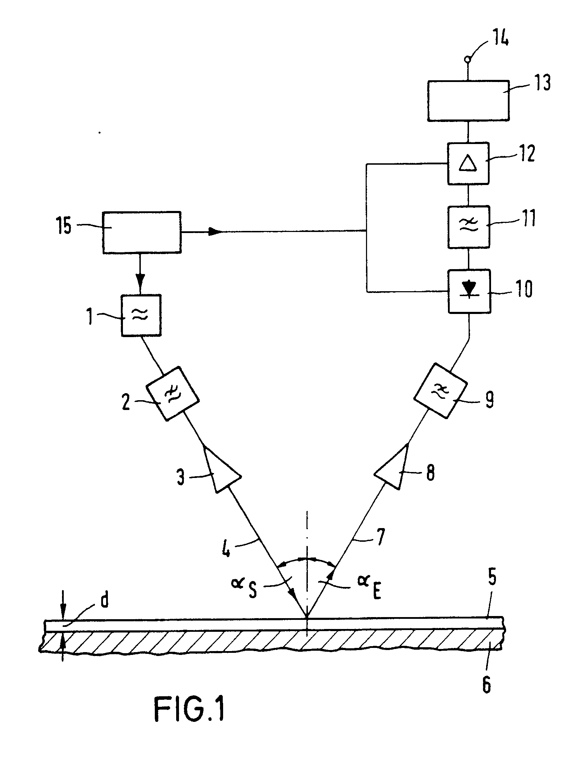

In Figur 1 ist mit 1 eine Signalquelle (z. B. Gunn-Oszillator, Quarzoszillator etc.) bezeichnet, der ein Filter 2 und eine Sendeantenne 3 (z. B. Hornantenne mit oder ohne dielektrische Linse etc.) nachgeschaltet ist. Die von der Antenne 3 erzeugten elektromagnetischen Wellen 4 gelangen auf die Wasserschicht 5, welche sich auf der Straße 6 befindet. Die reflektierten elektromagnetischen Wellen 7 werden von einer weiteren Antenne 8 über ein Filter 9 einem Detektor 10 zugeführt. Dieser Detektor kann entweder ein Mikrowellendetektor (Gleichrichter) oder eine Mischer-Filter-Kombination mit nachgeschaltetem Gleichrichter (Heterodynempfänger) sein. An dem Detektor 10 ist ein Tiefpaßfilter 11 und ein Verstärker 12 angeschlossen. In der Datenverarbeitungs-und Anzeigevorrichtung 13 erfolgt eine Auswertung der Meßsignale wobei das Ergebnis an einem Ausgang 14 abgegriffen werden kann.

Die Leistungsversorgung von Sende- und Empfangsteil erfolgt über eine Spannungsversorgungseinheit 15. Die Sendeund Empfangsantenne 3 und 8 sind unter einem Winkel $\alpha_S$ bzw. $\alpha_E$ gegen die Normale der Oberfläche angeordnet. Zweckmäßig ist die Wahl eines Winkels $\alpha_S = \alpha_E$ von $0°$ bis etwa $30°$. Größere Winkel und Winkel $\alpha_S \neq \alpha_E$ sind ebenfalls möglich. Die Strahlung kann horizontal, vertikal, zirkular oder elliptisch polarisiert sein.

Im folgenden wird kurz auf die Wirkungsweise der an sich bekannten Schaltungsvorrichtung eingegangen:

Die in der Signalquelle 1 erzeugte Mikrowellenstrahlung wird nach Passieren des Filters 2 über die Antenne 3 auf die zu untersuchende Oberfläche des Wasserfilms 5 abgestrahlt. Das Filter 2 dient dazu die Abstrahlung von Frequenzen zu unterbinden, die außerhalb des postalisch Zugelassenen Frequenzbereiches liegen.

Ein Teil der von der bestrahlten Oberfläche reflektierten Strahlung 7 wird über die Antenne 8 - alternativ über die Sendeantenne 3 mit nicht dargestelltem nachgeschaltetem Richtkoppler - empfangen. Nach Passieren des Filters 9 wird die Mikrowellenstrahlung mit einem Detektor 10 gleichgerichtet. Dieser wird bevorzugt im quadratischen Bereich seiner Kennlinie betrieben, da hier ein linearer Zusammen-hang zwischen der Leistung der Mikrowellenstrahlung und der Detektorausgangsspannung besteht.

Wahlweise kann die Mikrowellenstrahlung auch in einem Mischer zunächst auf eine niedrigere Frequenz heruntergemischt, gefiltert und anschließend mit einem Detektor gleichgerichtet werden. Zusätzlich kann die empfangene Mikrowellenstrahlung, bevor sie an den Detektor 10 gelangt, mit einem nicht dargestellten Vorverstärker auf einen höheren Leistungspegel angehoben werden.

Die am Ausgang des Gleichrichters 10 resultierende Signalspannung wird nach Passieren des weiteren Filters (Integrator) 11 in einem Verstärker 12 auf den benötigten Ausgangsgangsspannungspegel erhöht. In der Datenverarbeitungs-und Anzeigevorrichtung 13 wird die Signalspannung $U_S$, die von der Wasserfilmdicke d auf der bestrahlten Oberfläche abhängt abgegriffen und weiterverarbeitet.

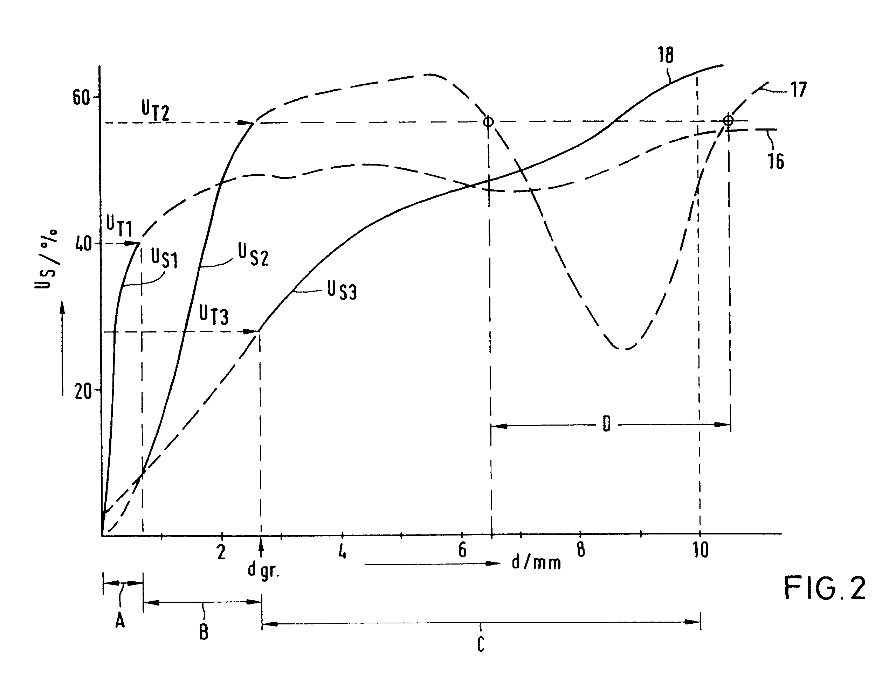

Die Abhängigkeit des Signalpegels $U_S$ von der Wasserfilmdicke d auf einer untersuchten Fahrbahnoberfläche für $\alpha_S = \alpha_E = 15°$ bei verschiedenen Frequenzen zeigt Figur 2. Dabei ist mit 16 der Signalpegelverlauf für 24,15 GHz mit 17 der entsprechende Verlauf für 2,45 GHz und mit 18 der Signalpegelverlauf für eine Frequenz von 0,434 GHz dargestellt (je nach Beschaffenheit der Oberfläche (z. B. Material, Wölbung, Rauhigkeit) können die Signalpegelverläufe etwas von den dargestellten Verläufen abweichen).

Eine Randbedingung für den praktischen Einsatz des Mikrowellensystems ist, daß ein Betrieb nur bei postalisch genehmigten Frequenzen erfolgen darf. Eine Genehmigung ist im allgemeinen nur für solche Frequenzen erhältlich, die für die industrielle Anwendung reserviert sind (z. B. 0,43305-0,43479 GHz, 2,40-2,50 GHz, 24,0-24,25 GHz).

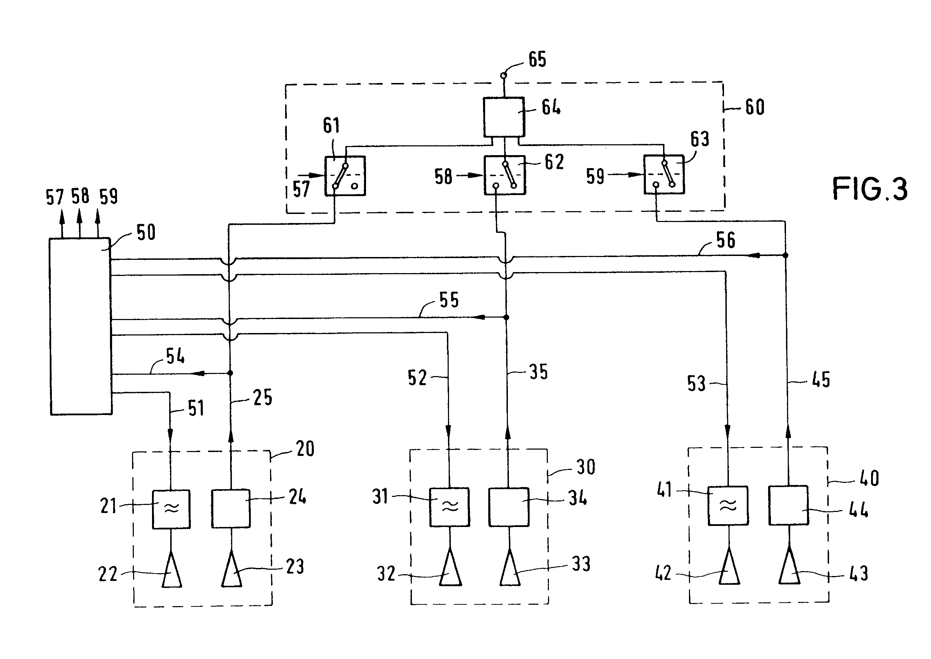

Figur 3 zeigt eine erfindungsgemäße Vorrichtung, die aus drei Teilsystemen 20, 30 und 40 zusammengesetzt ist, wobei jedes Teilsystem im wesentlichen den in Figur 1 gezeigten Aufbau (mit Ausnahme der Datenverarbeitungs- und Anzeigevorrichtung 13) aufweist. Zusätzlich enthält die Vorrichtung zur Kopplung und Ansteuerung der Teilsysteme 20, 30, 40 eine Abtast- und Steuervorrichtung sowie zur Auswertung der einzelnen Signale eine Signalverarbeitungsvorrichtung 60.

In den Teilsystemen 20, 30 und 40 wurden schematisch lediglich die Signalquellen (21, 31, 41) die Antennen (22, 23; 32, 33; 42, 43) sowie die Empfänger (24, 34, 44) eingezeichnet. Die Signalquellen 21, 31, 41 der Teilsysteme 20, 30, 40 sind über Leitungen 51, 52, 53 mit der Abtast- und Steuervorrichtung verbunden. Die Ausgangssignale der Teilsysteme 20, 30, 40 gelangen über eine Leitung 25, 35, 45 sowohl an die Signalverarbeitungsvorrichtung 60 als auch über eine weitere Leitung 54, 55, 56 an die Abtast- und Steuervorrichtung 50.

Die Signalverarbeitungsvorrichtung 60 besteht bei dem gezeigten Ausführungsbeispiel im wesentlichen aus drei elektronisch steuerbaren Schaltern 61, 62 und 63, die die Leitungen 25, 35 und 45 mit den Eingängen eines Odergatters 64 verbinden. Der Ausgang des Odergatters ist mit 65 bezeichnet. Die Steueranschlüsse der Schalter 61, 62 und 63 sind über Leitungen 57, 58 und 59 ebenfalls mit der Abtast-und Steuervorrichtung 50 verbunden.

Im folgenden wird näher auf die Funktionsweise der in Figur 3 wiedergegebenen Schaltungsvorrichtung eingegangen. Hierzu wird angenommen, daß das erste Teilsystem 20 mit einer Frequenz von ca. 24,15 GHz das zweite Teilsystem 30 mit einer Frequenz von ca. 2,45 GHz und das dritte Teilsystem mit einer Frequenz von ca. 0,434 GHz arbeitet.

Zunächst wird das Teilsystem 20 mit der höchsten Betriebsfreqenz von der Abtast- und Steuervorrichtung 50 über die Leitung 51 aktiviert. Die Antenne 22 strahlt dann elektromagnetische Wellen auf die wasserbedeckte Straße 6 (Figur 1) und die reflektierten elektromagnetischen Wellen gelangen in die Antenne 23. Die entsprechende verstärkte Signalspannung $U_{S1}$ wird über die Leitung 25 und den Schalter 61 dem Odergatter 64 zugeführt, so daß am Ausgang 65 dieses Odergatters der entsprechende Signalwert anliegt. Gleichzeitig wird der Signalwert $U_{S1}$ über die Leitung 54 der Abtast- und Steuervorrichtung 50 zugeführt. Diese Vorrichtung vergleicht den Wert $U_{S1}$ ständig mit einem Grenzwert $U_{T1}$, der sich aus der Meßkurve 16 (Fig. 2) ergibt und den Maximalwert für das Teilsystem 1 darstellt, ab dem keine ausreichende Genauigkeit (Linearität) und Eindeutigkeit bei der Messung der Wasserschichtdicke erreicht werden kann. Der Vergleich in der Abtast- und Steuervorrichtung 50 kann entweder hardwaremäßig mit Hilfe von Komparatoren oder softwaremäßig mit Hilfe eines Mikroprozessors durchgeführt werden.

Für Werte $U_{S1} < U_{T1}$ bleibt der Schalter 61 der Signalverarbeitungsvorrichtung 60 geschlossen, so daß die Ausgangsspannung $U_{S1}$ des Teilsystems 20 am Ausgang 65 der Vorrichtung 60 liegt.

Für Werte $U_{S1} > U_{T1}$ gelangen Steuersignale über die Leitung 57 an den Schalter 61, so daß dieser geöffnet wird. Gleichzeitig wird über die Leitung 58 der Schalter 62 geschlossen, so daß jetzt der Ausgang 65 der Signalverarbeitungsvorrichtung 60 mit dem Ausgang des Teilsystems 30 verbunden ist. Außerdem deaktiviert die Abtast- und Steuervorrichtung das erste Teilsystem und aktiviert das zweite und dritte Teilsystem 30 und 40. Ähnlich wie bereits oben beschrieben wird nun auch beim zweiten Teilsystem die Signalspannung $U_{S2}$ ständig von der Abtast- und Steuervorrichtung überwacht und mit einem Grenzwert $U_{T2}$ (vgl. Figur 2) verglichen, der für die Signalspannung $U_{S2}$ den Grenzwert der Meßkurve 17 darstellt, bei dem eine ausreichende Genauigkeit nicht mehr erreicht werden kann.

Wie aus Figur 2 zu entnehmen ist, stellt $U_{S2}$ keine eindeutige Funktion der mittleren Wasserfilmdicke d im gesamten Meßbereich dar. Denn es gibt einen zweiten Wertebereich D zwischen ca. 6,5 und 10,5 mm für den die Signalspannung $U_{S2}$ ebenfalls kleiner als der Grenzwert $U_{T2}$ ist. So weist Beispiel $U_{S2}$ den gleichen Wert bei etwa 2 mm, 7,2 mm und 10 mm mittlerer Wasserfilmdicke auf. Um die Wasserfilmdikkenmessung eindeutig zu machen, wird erfindungsgemäß vorgeschlagen, das dritte Teilsystem 40 daher zusammen mit dem Teilsystem 30 zu aktivieren. So kann gewährleistet werden, daß der $U_{S2}$-Wert ($U_{S12}$ kleiner $U_{T2}$) der an den Ausgang 65 (Figur 3) gelangt, der Wert ist, der von der Wasserfilmdicke im Bereich B resultiert und entsprechend auf der linken Seite des Kurvenmaximus der Kurve 17 liegt. Dieses ist genau dann der Fall, wenn $U_{S3}$ kleiner $U_{T3}$ ist, wobei $U_{S3}$ die Signalspannung des Empfängers 44 und $U_{T3}$ der Signalspannungsgrenzwert ist, bei dem der Meßbereich C des dritten Teilsystems 40 beginnt.

Aus dem vorstehenden ergibt sich also, daß bei der Wasserfilmdickenmessung mit dem zweiten Teilsystem 30 ständig auch die Signalspannung $U_{S3}$ des dritten Teilsystems ermittelt und von der Abtast- und Steuervorrichtung 50 (Figur 3) überwacht werden muß. Ist der Grenzwert $U_{T3}$ überschritten, wird über die Steuerleitung 58 der Schalter 62 geöffnet und über die Steuerleitung 59 der Schalter 63 geschlossen, so daß jetzt am Ausgang 65 der Signalverarbeitungsvorrichtung 60 die Signalspannung $U_{S3}$ des dritten Teilsystems liegt. Hiermit ist gleichzeitig sichergestellt, daß nur $U_{S2}$-Werte die dem linken ansteigenden Teil der Kurve 17 (Figur 2) entsprechen an den Ausgang 65 gelangen. Die Messung ist somit eindeutig.

In Figur 2 sind die den Teilsystemen 20, 30 und 40 entsprechenden Meßbereiche mit A, B und C bezeichnet. Die entsprechenden Kurvenabschnitte der Signalspannungen sind als durchgehende Linie eingetragen.

Die Angleichung der Signalspannungen $U_{S1}$, $U_{S2}$ und $U_{S3}$ an den Grenzen der Meßbereiche kann dadurch erfolgen, daß die Signalspannungen so verstärkt werden, daß die Signalspannung $U_{S1}$ am Ende des Meßintervalles A also beim Grenzwert $U_{T1}$ gleich der korrespondierenden Signalspannung $U_{S2}$ ist. Weiter ist die Signalspannung $U_{S3}$ so zu verstärken, daß der Wert der Spannung $U_{S3}$ beim Grenzwert $U_{T3}$ gleich dem Wert der korrespondierenden Grenzspannung $U_{T2}$ ist. Aufgrund dieser Anpassung der Signalpegel an den Grenzen der Meßbereiche wächst die Signalspannung $U_S$ kontinuierlich mit der Wasserfilmdicke d unabhängig von der jeweils verwendeten Empfangsfrequenz.

Eine andere Möglichkeit zu einer zusammenhängenden Kennlinie zu gelangen besteht darin, daß die Werte der Signalspannungen $U_{S1}$ und $U_{S2}$ an der Grenze der Meßintervalle A und B durch Addition von Offsetspannungen $U_{OFF}$ angeglichen werden. Am Übergang von Meßintervall B zu Meßintervall C werden die Werte der Signalspannungen $U_{S2}$ und $U_{S3}$ durch Addition eines zusätzlichen Gleichspannungspegels $U_{off}$ ebenfalls angeglichen. Durch diese additive Angleichung der Signalspannungswerte an den Grenzen der Meßbereiche A, B und C läßt sich wie bei der vorstehenden Lösung ein mit der Wasserfilmdicke d kontinuierlich ansteigender Wert der Signalspannungen $U_S$ bewirken.

Die Angleichung der Signalspannungen $U_{S1}$, $U_{S2}$ und $U_{S3}$ an den Grenzen der Meßbereiche kann auch durch eine Kombination der Signalspannungsverstärkung und der Spannungsaddition erzielt werden. Mit diesem kombinierten Spannungsabgleich läßt sich die Signalspannungscharakteristik des Mikrowellensystems` d. h. die Abhängigkeit der Signalausgangsspannung $U_S$ von der Wasserschichtdicke d optimieren. Diese Optimierung kann z. B. in Bezug auf die Linearität der $U_S$ (d)-Charakteristik erfolgen.

Eine Optimierung der $U_S$ (d)-Charakteristik hinsichtlich eines linearen Verlaufs kann auch durch einen in den Empfängern 24, 34, 44 enthaltenen Verstärker mit einer auf die Nichtlinearität der $U_S$ - (d)-Charakteristik angepaßten Verstärkungscharakteristik erreicht werden. Weiter kann eine Linearisierung der $U_S$ (d)-Charakteristik durch Verwendung von Analog-Digital-Wandlern mit nachgeschalteten Halbleiterspeichern, welche in den Empfängern 24, 34, 44 angeordnet sind, erfolgen. In diesen Speichern werden Korrekturwerte abgelegt, die eine Linearisierung der Signalspannung $U_S$ am Ausgang des Speichers bewirken.

Mit der erfindungsgemäßen Vorrichtung können die Meßabläufe selbstverständlich auch automatisch modifiziert werden. Hierzu ist bei Verwendung eines Mikroprozessors in der Abtast-und Steuervorrichtung lediglich eine Änderung des Programmes erforderlich. So kann es beispielsweise zweckmäßig sein, bei Regenbeginn alle Teilsysteme 20, 30 und 40 über die Leitungen 51, 52 und 53 zu aktivieren. Die jeweiligen Signalwerte $U_{S1}$, $U_{S2}$ und $U_{S3}$ werden über die Leitungen 54, 55 und 56 der Abtast- und Steuervorrichtung zugeführt und dort mit den entsprechenden Grenzwerten verglichen. Entsprechend den in Figur 2 skizzierten Meßbereichen A, B, C wird dann eine dieser Signalspannungen an die Signalverarbeitungsvorrichtung 60 geschaltet welche registriert, welches der drei Teilsysteme jeweils an den Signalausgang 65 geschaltet wurde.

Für die Festlegung des jeweiligen Meßbereichs kann beispielsweise zunächst das 3. Teilsystem 40 aktiviert und die mit diesem System gemessene Signalspannung $U_{S3}$ herangezogen werden.

Bezugszeichen-Liste

| | |
|---|---|
| 1 | Signalquelle, die Mikrowellen erzeugt |
| 2 | Filter |
| 3 | Antenne |
| 4 | elektromagnetische Welle |
| 5 | Wasserschicht |
| 6 | Straße |
| 7 | reflektierte elektromagnetische Welle |
| 8 | Antenne |
| 9 | Filter |
| 10 | Detektor |
| 11 | Filter (Integrator) |
| 12 | Verstärker |
| 13 | Datenverarbeitungs- und Anzeigevorrichtung |
| 14 | Ausgang der DAV |
| 15 | Spannungsversorgungseinheit |
| 16 | Meßkurve für Frequenz 24,15 GHz |
| 17 | " " " 2,415 |
| 18 | " " " 0,434 GHz |
| 20 | 1. Teilsystem (mit höchst. Betriebsfrequenz) |
| 21 | Signalquelle |
| 22 | Antenne |
| 23 | " |
| 24 | Empfänger |
| 25 | elektr. Leitung |
| 30 | 2. Teilsystem |
| 31 | Signalquelle |
| 32 | Antenne |
| 33 | Antenne |
| 34 | Empfänger |
| 35 | elektr. Leitung |
| 40 | 3. Teilsystem |
| 41 | Signalquelle |
| 42 | Antenne |
| 43 | Antenne |
| 44 | Empfänger |
| 45 | elektr. Leitung |
| 50 | Abtast- und Steuervorrichtung |
| 51-5 | 9 elektr. Leitungen |
| 60 | Signalverarbeitungsvorrichtung |
| 61, 62, 63 | Schalter |
| 64 | ODER-Gatter |
| 65 | Ausg. der Signalverarbeitungsvorrichtung 60 |

## Ansprüche

1. Vorrichtung zur Ermittlung der mittleren Wasserfilmdicke (d) auf Straßenoberflächen (6), wobei die Reflektion von Mikrowellen an der Oberfläche des Wasserfilmes (5) gemessen wird,
**gekennzeichnet durch** die Merkmale:

- die Vorrichtung besteht aus mindestens zwei Teilsystemen (20, 30, 40) die jeweils eine Signalquelle (21, 31, 41) und einen Empfänger (24, 34, 44) enthalten;

- die einzelnen Teilsysteme (20, 30, 40) arbeiten mit unterschiedlichen Frequenzen (f1, f2, f3) die derart gewählt sind, daß die der jeweiligen Frequenz (f1, f2, f3) zugeordneten Meßbereiche maximaler Meßgenauigkeit (A, B, C) sich aneinander anschließen und den vorgegebenen zu bestimmenden Wasserfilmdickenbereich überdecken;

- die Teilsysteme (20, 30, 40) sind mit einer Abtastund Steuervorrichtung (50) verbunden, welche jeweils das Teilsystem (20, 30, 40) aktiviert, welches bei der entsprechenden Wasserfilmdicke (d) die maximale Meßgenauigkeit aufweist.

2. Vorrichtung zur Ermittlung der mittleren Wasserfilmdicke nach Anspruch 1,
**dadurch gekennzeichnet**, daß
die Vorrichtung zur Messung der Wasserfilmdicke d für den Meßbereich 0 < d < 10 mm drei Teilsysteme (20, 30, 40) enthält, daß die Frequenz des 1. Teilsystems (20) zwischen 24 und 24, 25 GHz, des 2. Teilsystems (30) zwischen 2,4 und 2,5 GHz und des 3. Teilsystems (40) zwischen 0,433 und 0,434 GHz liegt.

3. Verfahren zum Betrieb der Vorrichtung nach Anspruch 2, **dadurch gekennzeichnet**, daß zunächst das 1. Teilsystem (20) aktiviert wird, daß bei Überschreiten eines vorgegebenen Grenzwertes $U_{T1}$ der Signalspannung $U_{S1}$ des im 1. Teilsystem enthaltenen Empfängers (24) das 2. und 3. Teilsystem (30, 40) angeschaltet wird, wobei die Wasserfilmdickenmessung d zunächst mit dem 2. Teilsystem erfolgt und wobei die Signalspannung $U_{S3}$ des im 3. Teilsystem enthaltenen Empfängers (44) zur eindeutigen Definition des Meßbereichs (B) des 2. Teilsystems (30) herangezogen wird, und daß bei Überschreiten eines vorgegebenen Grenzwertes $U_{T2}$ der Signalspannung $U_{S2}$ des im 2. Teilsystems enthaltenen Empfängers (34) das 3. Teilsystem (40) zur Wasserfilmdickenmessung herangezogen wird.

4. Verfahren zum Betrieb der Vorrichtung nach Anspruch 2, **dadurch gekennzeichnet**, daß zunächst das 3. Teilsystem (40) aktiviert wird, daß mit Hilfe der gemessenen Signalspannung $U_{S3}$ ermittelt wird, welcher Bereich (A, B, C) maximaler Meßgenauigkeit der einzelnen Teilsysteme (20, 30, 40) vorliegt, und daß dann die Wasserfilmdickenbestimmung mit dem entsprechenden Teilsystem (20, 30, 40) durchgeführt wird.

FIG.1

FIG.2

EP 0 432 360 A2

FIG.3

EP 0 432 360 A2